# EUROPÄISCHE PATENTANMELDUNG

(11) **EP 1 923 294 A2**
(43) Veröffentlichungstag der Anmeldung: **21.05.2008**
(21) Anmeldenummer: 07022359.9
(22) Anmeldetag: 19.11.2007
(51) Int. Cl.: B62B 7/14, B62B 9/12, B62B 9/14

(54) **Personenaufnahmevorrichtung sowie diese umfassender Personentransportwagen**

(30) Priorität: 17.11.2006 DE 202006017557 U
(71) Anmelder: ILinko Ltd, Quarry Bay, Hong Kong (CN)
(72) Erfinder: Lake, Jon, Sunnyvale, CA 94087 (US)
(74) Vertreter: Metten, Karl-Heinz

(57) **Zusammenfassung**

Die Erfindung betrifft eine Personenaufnahmevorrichtung (5, 105') für einen Personentransportwagen, wobei die Personenaufnahmevorrichtung (5, 105') zumindest einen Rahmen (25) umfasst und von einer Sitzkonfiguration, in der die Person in einer im wesentlichen sitzenden Position aufnehmbar ist, in eine Korbkonfiguration, in der die Person im wesentliche liegend aufnehmbar ist, und/oder umgekehrt überführbar ist, wobei der Neigungswinkel zumindest einer in der Sitzkonfiguration zumindest eine Rückenlehne festelegenden ersten Rahmenkomponente (27), insbesondere relativ zu zumindest einem Hauptrahmen des Personentransportwagens, über zumindest eine erste Drehvorrichtung (61) einstellbar ist und der Rahmen (25) zumindest eine in der Sitzkonfiguration zumindest eine Sitzfläche festlegende zweite Rahmenkomponente (29) umfasst, wobei zumindest ein Winkel zwischen der ersten (27) und der zweiten Rahmenkomponente (29) unabhängig von der ersten Drehvorrichtung (61) über eine die erste (27) und die zweite Rahmenkomponente (29) verbindende zweite Drehvorrichtung (63) einstellbar ist.

## Beschreibung

Die vorliegende Erfindung betrifft eine Personenaufnahmevorrichtung für einen Personentransportwagen, wobei die Personenaufnahmevorrichtung zumindest einen Rahmen umfasst und von einer Sitzkonfiguration, in der die Person in einer im wesentlichen sitzenden Position aufnehmbar ist, in eine Korbkonfiguration, in der die Person im wesentliche liegend aufnehmbar ist, und/oder umgekehrt überführbar ist, wobei der Neigungswinkel zumindest einer in der Sitzkonfiguration zumindest eine Rückenlehne festelegenden ersten Rahmenkomponente, insbesondere relativ zu zumindest einem Hauptrahmen des Personentransportwagens, über zumindest eine erste Drehvorrichtung einstellbar ist und der Rahmen zumindest eine in der Sitzkonfiguration zumindest eine Sitzfläche festlegende zweite Rahmenkomponente umfasst sowie einen Personentransportwagen, insbesondere in Form eines Kinderwagens, umfassend eine erfindungsgemäße Personenaufnahmevorrichtung.

Aus dem Stand der Technik ist eine Vielzahl von Personentransportwagen, insbesondere in Form von Kinderwagen, bekannt.

So offenbart beispielsweise die US 6,446,900 B1 ein Transportfahrzeug für ein Kind geringen Alters. Das Transportfahrzeug umfasst einen Rahmen, an dem eine Kindertragewanne lösbar befestigt werden kann. Zur Verriegelung der Wanne an dem Rahmen weist die Wanne eine Stange auf, an die ein an dem Rahmen angeordneter Verriegelungsmechanismus angreifen kann. Dazu ist der Verriegelungsmechanismus drehbar gelagert und weist Ausnehmungen zur Aufnahme der Stange in einer Verriegelungsposition der Verriegelungseinrichtung auf.

Des weiteren offenbart die US 6,286,844 B1 einen Kinderwagen mit entfernbarem Sitz. Dieser Kinderwagen enthält einen Rahmen sowie einen Kinderwagensitz, der an den Rahmen über eine gattungsbildende Verbindungsvorrichtung gekoppelt werden kann. Um eine Verriegelung des Sitzes an dem Rahmen zu erreichen, weist der Sitz einem Halterungszapfen auf, der Eingriff in einen Haken einer Verriegelungsvorrichtung, die mit dem Rahmen in Wirkverbindung steht, finden kann. Um einen Eingriff des Hakens in den Zapfen lösen zu können, weist der Sitz einen Freigabeknopf auf, welcher bei einer Befestigung des Sitzes an dem Rahmen mit dem Haken in Wirkverbindung steht. Zur Entriegelung des Sitzes von dem Rahmen wird der Auslöseknopf heruntergedrückt, wodurch der Eingriff des Hakens in den Zapfen gelöst wird.

Die DE 299 23 625 U1 offenbart einen Buggy umfassend einen Rahmen und einen an diesem befestigbaren Sitz. Über eine Steckerbuchsenverbindung kann der Sitz sowohl in eine Fahrtrichtung des Buggys als auch in die entgegengesetzte Richtung an dem Rahmen angebracht werden sowie über ein Gelenk ein Neigungswinkel des ansonsten statischen Sitzes relativ zu dem Rahmen eingestellt werden.

Der Nachteil der aus dem Stand der Technik bekannten Verriegelungsvorrichtungen ist jedoch, dass deren Bedienung je nach Betriebsposition des Kinderwagens beeinträchtigt ist. Insbesondere bei Kinderwagen, bei denen eine Kinderaufnahmevorrichtung sowohl mit als auch gegen die Fahrtrichtung angeordnet werden kann, ist es möglich, dass eine Bedienungseinrichtung für eine Verriegelungsvorrichtung durch andere Anbauten des Kinderwagens, wie Elemente des Rahmens, verdeckt ist und so nur schwer durch einen Benutzer zu bedienen ist.

Darüber hinaus sind aus dem Stand der Technik Kinderwagen bekannt, bei denen eine Kinderaufnahmevorrichtung von einer Sitzkonfiguration in eine Wannen- oder Korbkonfiguration überführt werden kann.

So ist der US 4,836,573 eine Kombination eines Kinderwagens und einer Babywiege zu entnehmen. Diese Kombination umfasst einen Rahmen des Kinderwagens sowie eine gattungsgemäße Kinderaufnahmevorrichtung, die schwenkbar an dem Rahmen befestigt ist. Um die Kinderaufnahmevorrichtung von einer Korbkonfiguration, in der die Kinderaufnahmevorrichtung im wesentlichen kubusförmig ausgebildet ist, in eine Sitzkonfiguration zu überführen, wird diese zunächst derartig verschwenkt, dass eine Seitenwand der Kinderaufnahmevorrichtung eine Sitzfläche bildet, während eine Bodenfläche der Kinderaufnahmevorrichtung die Funktion einer Rücklehne übernimmt. Die weiteren drei Seitenwände der Kinderaufnahmevorrichtung sind als flexible Seitenwände ausgebildet, so dass die Kinderaufnahmevorrichtung von der Kubusform in eine Keilform überführt werden kann. Nachteilig bei dieser Kombination ist jedoch, dass die Sitzkonfiguration wenig komfortabel für ein Kind ist, da eine Einstellung der verschiedenen Sitzkomponenten zueinander nicht möglich ist.

Die US 5,833,261 offenbart eine Fußstütze für einen Kinderwagen, welche zwischen zwei Positionen bewegbar ist. Der Kinderwagen weist einen Rahmen auf, an welchem Elemente befestigt sind, die es erlauben, dass der Rahmen eine Kinderaufnahmevorrichtung einerseits in Form eines Sitzes und andererseits in Form eines Korbes oder einer Wanne aufnehmen kann. Dazu kann einerseits ein eine Rücklehne festlegendes Element des Rahmens derartig verschwenkt werden, dass ein Winkel zwischen diesem Element und einem eine Sitzfläche festlegenden Element verändert werden kann. Nachteil bei diesem Kinderwagen ist jedoch, dass der Rahmen nicht an unterschiedliche Sitzkonfigurationen angepasst werden kann, insbesondere ein Neigungswinkel einer Sitzfläche eines Sitzes nicht veränderbar ist.

Ferner sind aus dem Stand der Technik Verdecke für Kinderwagen, insbesondere zum Schutz vor Sonneneinstrahlung und Regen, bekannt.

So offenbart die DE 20 2005 010 099 U1 einen Kinderwagen, welcher ein Verdeck aufweist. Das Verdeck weist zwei Verdeckbügel auf, an denen und zwischen denen ein doppellagiger Verdeckstoff angeordnet ist. Zum Aufspannen des Verdecks wird der Winkel zwischen den Verdeckbügeln vergrössert, so dass der Stoff aufgespannt wird, während zum Einklappen des Verdecks der Winkel zwischen Verdeckbügel unter Faltung des Verdeckstoffes verringert wird. Nachteilig bei diesem Verdeck ist jedoch, dass der Verdeckstoff Schaden nehmen kann, wenn das Verdeck in feuchtem Zustand zusammengeklappt wird. So kann es aufgrund einer unzureichenden Belüftung dazu kommen, dass sich auf dem Verdeckstoff Schimmel oder ähnliches bildet oder Farbveränderungen auftreten.

Ferner offenbart die US 2004/0119266 A1 einen Kindersportwagen. Dieser Kindersportwagen weist einen Rahmen auf, an welchem ein Kindertragkörper befestigt werden kann. Der Kindertragkörper weist ein Verdeck auf. Dieses Verdeck ist in Form einer Halbkugel aus einem im wesentlichen unflexiblen Material ausgebildet. Das Verdeck ist derartig drehbar an der Kinderaufnahmevorrichtung befestigt, dass es in einer ersten Konfiguration die Kinderaufnahmevorrichtung im wesentlichen bedeckt und in einer zweiten Konfiguration im wesentlichen unterhalb der Kinderaufnahmevorrichtung angeordnet wird. Nachteilig bei diesem Verdeck ist jedoch, dass das Verdeck in seiner Größe nicht veränderbar ist, was den Kinderwagen, insbesondere bei einem Transport, unhandlich macht.

Daher ist es die Aufgabe der vorliegenden Erfindung eine Personenaufnahmevorrichtung für einen Personentransportwagen bereitzustellen, die die Nachteile des Stands der Technik überwindet, insbesondere eine größtmögliche Variabilität bei der Einstellung der Sitzposition ermöglicht. Ferner soll ein Personentransportwagen, insbesondere in Form eines Kinderwagens, bereitgestellt werden, der die Nachteile des Stands der Technik überwindet.

Diese Aufgabe wird erfindungsgemäß dadurch gelöst, dass zumindest ein Winkel zwischen der ersten und der zweiten Rahmenkomponente unabhängig von der ersten Drehvorrichtung über eine die erste und die zweite Rahmenkomponente verbindende zweite Drehvorrichtung einstellbar ist.

Dabei kann insbesondere vorgesehen sein, dass der Rahmen zumindest eine, vorzugsweise in der Sitzkonfiguration eine Fußstütze festlegende, dritte Rahmenkomponente aufweist, wobei die zweite und dritte Rahmenkomponente über zumindest eine dritte Drehvorrichtung miteinander verbunden sind, insbesondere zumindest ein Winkel zwischen der zweiten und dritten Rahmenkomponente einstellbar ist.

Bei den beiden vorgenannten Alternativen kann vorgesehen sein, dass die Personenaufnahmevorrichtung, zumindest in der Korbkonfiguration, eine im wesentlichen ebene Liegefläche, insbesondere gebildet durch zumindest einen Teil der Rückenlehne und/oder zumindest einen Teil der Sitzfläche, umfasst.

Ferner wird mit der Erfindung vorgeschlagen, dass die erfindungsgemäße Personenaufnahmevorrichtung gekennzeichnet ist durch zumindest einen mit der ersten und/oder der zweiten Rahmenkomponente, insbesondere lösbar, verbindbare und/oder mit der ersten und/oder der zweite Rahmenkomponente zumindest bereichsweise einstückig ausgebildeten Bügel, wobei der Bügel vorzugsweise in der Sitzkonfiguration als Sicherheitsbügel verwendbar ist und/oder in der Korbkonfiguration als Tragegriff verwendbar ist.

Dabei ist besonders bevorzugt, dass mittels der ersten Drehvorrichtung der Winkel zwischen der ersten Rahmenkomponente und einem Hauptrahmen eines Personentransportwagens, mittels der zweiten Drehvorrichtung der Winkel zwischen der ersten und der zweiten Rahmenkomponente und/oder mittels der dritten Drehvorrichtung der Winkel zwischen der zweiten und dritten Rahmenkomponente kontinuierlich und/oder in diskreten Schritten einstellbar ist bzw. sind und/oder mittels der ersten Drehvorrichtung die erste Rahmenkomponente relativ zu einem Hauptrahmen eines Personentransportwagens, mittels der zweiten Drehvorrichtung die zweite Rahmenkomponente relativ zu der ersten Rahmenkomponente und/oder mittels der dritten Drehvorrichtung die dritte Rahmenkomponente relativ zu der zweiten Rahmenkomponenten klapp- bzw. drehbar und gegebenenfalls fixierbar ist bzw. sind.

Auch wird mit der Erfindung vorgeschlagen, dass der Rahmen, insbesondere die erste, zweite oder dritte Rahmenkomponente, mittels zumindest einer Verbindungsvorrichtung an einem Hauptrahmen eines Personentransportwagens, insbesondere reversibel lösbar, befestigbar ist.

Eine alternative Ausführungsform der Erfindung sieht vor zumindest ein, insbesondere mit der ersten, der zweiten und/oder der dritten Rahmenkomponente und/oder der ersten, zweiten und/oder dritten Drehvorrichtung verbindbares oder verbundenes, vorzugsweise faltbares und/oder, insbesondere teleskopartig ineinander schiebbares Verdeck.

Weiterhin kann eine erfindungsgemäße Personenaufnahmevorrichtung aufweisen zumindest eine an zumindest einer ersten, zweiten oder dritten Rahmenkomponente, insbesondere lösbar, befestigbare und/oder mit zumindest einer ersten, zweiten oder dritten Rahmenkomponente einstückig ausgebildete, vorzugsweise die Sitzfläche und/oder die Rückenlehne bildende, Sitzkomponente, insbesondere umfassend zumindest eine, vorzugsweise textile, Bespannung und/oder zumindest eine im wesentlichen feste Auflage, wie zumindest eine Schalenkomponente.

Besonders bevorzugt ist, dass die zweite Rahmenkomponente derartig aufgeformt ist, dass sie zumindest in der Sitzkonfiguration zwei seitliche Armstützen bereitstellt.

In einer Weiterentwicklung umfasst die erfindungsgemäße Personentransportvorrichtung eine kombinierte, insbesondere einheitliche, Drehvorrichtung, umfassend die erste und die zweite Drehvorrichtung. Hierbei ist es ebenfalls möglich, dass die Verbindungsvorrichtung die erste und die zweite Drehvorrichtung oder die kombinierte Drehvorrichtung umfasst.

Ferner liefert die Erfindung einen Personentransportwagen umfassend eine erste Komponente, insbesondere in Form oder als Teil eines Hauptrahmens, und zumindest eine erfindungsgemäße Personenaufnahmevorrichtung als zweite Komponente.

Dabei kann der Personentransportwagen ferner umfassen zumindest eine Verbindungsvorrichtung zur reversibel lösbaren Verbindung zumindest einer ersten Komponente, insbesondere des Hauptrahmens, und zumindest der Personenaufnahmevorrichtung als zweiter Komponente des Personentransportwagens, wobei die Verbindungsvorrichtung zumindest eine Verriegelungseinrichtung mit zumindest einem mit der ersten Komponente in Wirkverbindung stehenden ersten Verriegelungselement, zumindest einem mit der zweiten Komponente in Wirkverbindung stehenden zweiten Verriegelungselement und zumindest einer Betätigungsvorrichtung umfasst, wobei die Verriegelungseinrichtung zumindest eine Verriegelungsposition, in der das erste Verriegelungselement und das zweite Verriegelungselement in mechanischem Eingriff miteinander stehen, und zumindest eine Entriegelungsposition, in der der mechanische Eingriff gelöst ist, aufweist, wobei das erste und/oder das zweite Verriegelungselement mittels der Betätigungsvorrichtung zur Überführung der Verriegelungseinrichtung in die Verriegelungsposition und/oder Entriegelungsposition bewegbar ist bzw. sind, wobei die Betätigungsvorrichtung zumindest eine erste Betätigungseinrichtung und zumindest eine zweite Betätigungseinrichtung umfasst und durch eine Betätigung der ersten Betätigungseinrichtung und/oder durch eine Betätigung der zweiten Betätigungseinrichtung das erste Verriegelungselement von einer Verriegelungs- in eine Entriegelungsstellung, oder umgekehrt, gleichsinnig bewegbar ist und/oder durch eine Betätigung der ersten Betätigungseinrichtung und/oder durch eine Betätigung der zweiten Betätigungseinrichtung das zweite Verriegelungselement von einer Verriegelungs- in eine Entriegelungsstellung, oder umgekehrt, gleichsinnig bewegbar ist und wobei vorzugsweise die erste und die zweite Betätigungseinrichtung von verschiedenen, insbesondere gegenüberliegenden, Seiten der Verbindungsvorrichtung aus betätigbar sind.

Des weiteren kann der erfindungsgemäße Transportwagen umfassen zumindest ein Rad, zumindest einen Radträger, zumindest einen Griff, zumindest eine Schubstange, zumindest einen Hilfssitz, zumindest ein Trittbrett und/oder zumindest ein, vorzugsweise faltbares, Verdeck, insbesondere in Form einer Abdeckhaube, eines Baldachins, einer Überdachung, eines Vordachs, eines Schirms und/oder einer Haube.

Bevorzugte Ausführungsformen sehen vor, dass die Verbindungseinrichtung zumindest eine erste Kraftaufbaueinrichtung, insbesondere umfassend zumindest eine Federeinrichtung, mittels der das erste Verrieglungselement in zumindest eine Verrieglungsposition oder zumindest eine Entriegelungsposition zwingbar ist und/oder zumindest eine zweite Kraftaufbaueinrichtung, insbesondere umfassend zumindest eine Federeinrichtung, mittels der das zweite Verrieglungselement in zumindest eine Verrieglungsposition oder zumindest eine Entriegelungsposition zwingbar ist, umfasst.

Dabei ist bevorzugt, dass die erste Komponente und das erste Verriegelungselement und/oder die zweite Komponente und das zweite Verriegelungselement zumindest bereichsweise einstückig ausgebildet sind.

Die Erfindung schlägt ferner vor, dass das erste Verriegelungselement und/oder das zweite Verriegelungselement einerseits und die erste Betätigungseinrichtung und/oder die zweite Betätigungseinrichtung andererseits zumindest bereichsweise einstückig ausgebildet sind.

Eine alternative Ausführungsform der Erfindung sieht vor, dass das erste Verriegelungselement oder der zweite Verriegelungselement, insbesondere mittels der ersten und zweiten Betätigungseinrichtung, bewegbar gelagert ist, wobei vorzugsweise das zweite bzw. das erste Verriegelungselement im wesentlichen ortfest zumindest indirekt an der zweiten bzw. der ersten Komponente befestigt ist und/oder in dieser ortsfest ausgebildet ist.

Weiterhin wird vorgeschlagen, dass das erste Verriegelungselement oder das zweite Verriegelungselement um zumindest eine Drehachse drehbar gelagert ist, wobei insbesondere sowohl mittels der ersten Betätigungseinrichtung als auch mittels der zweiten Betätigungseinrichtung ein gleichsinniges Drehmoment auf das erste bzw. das zweite Verriegelungselement ausübbar ist.

Bevorzugt ist ferner, dass das erste Verriegelungselement und das zweite Verriegelungselement zumindest bereichsweise zueinander komplementäre Oberflächenformen aufweisen und/oder das erste Verriegelungselement und/oder das zweite Verriegelungselement zumindest einen Fanghaken, zumindest einen Rasthaken, zumindest eine Stange und/oder zumindest einen Stift umfasst bzw. umfassen.

Auch wird mit der Erfindung vorgeschlagen, dass die erste Betätigungseinrichtung und die zweite Betätigungseinrichtung jeweils in Form zumindest eines longitudinal bewegbaren Elementes ausgebildet sind, wobei ein Ende des jeweiligen Elementes zumindest zeitweise Angriff an dem ersten Verriegelungselementes oder dem zweiten Verriegelungselement findet.

Ein erfindungsgemäßer Personentransportwagen kann ferner aufweisen zumindest ein Verdeck zur zumindest teilweisen Überspannung zumindest einer Öffnung der Personenaufnahmevorrichtung, wobei das Verdeck zumindest zwei relativ zueinander um zumindest eine gemeinsame Drehachse bewegbare Verdeckelemente umfasst und die Verdeckelemente in einer die Drehachse beinhaltenden, ersten Ebene zumindest bereichsweise eine im wesentlichen bogenförmige Umfangsform aufweisen, und die Verdeckelemente in einer zweiten, im wesentlichen senkrecht zu der Drehachse verlaufenden, zweiten Ebene zumindest bereichsweise eine im wesentlichen kreissegmentförmige und/oder keilförmige Umfangsform aufweisen und sich die Abmessungen zumindest eines ersten Verdeckelementes und zumindest eines zweiten Verdeckelementes in der ersten Ebene so unterscheiden, dass das erste und das zweite Verdeckelement durch eine Drehung um die Drehachse teleskopartig ineinander schiebbar sind.

Dabei ist bevorzugt, dass das erste und/oder das zweite Verdeckelement in der ersten Ebene zumindest eine zumindest bereichsweise kreisförmige, ellipsenförmige, parabelförmige und/oder mehreckförmige, wie dreieckförmige und/oder rechteckförmige, Umfangsform aufweist bzw. aufweisen.

Bei den beiden vorgenannten Alternativen wird mit der Erfindung vorgeschlagen, dass zumindest eine einen Abstand zwischen der Drehachse und dem Umfang des ersten Verdeckelementes in der ersten Ebene bezeichnende geometrische erste Abmessung größer als eine entsprechende einen Abstand zwischen der Drehachse und dem Umfang des zweiten Verdeckelementes in der ersten Ebene bezeichnende zweite geometrische Abmessung ist und/oder zumindest ein Radius der Umfangsform des ersten Verdeckelementes in der ersten Ebene größer als zumindest ein Radius der Umfangsform des zweiten Verdeckelementes in der ersten Ebene ist.

Weiterhin sieht die Erfindung vor zumindest eine Mitnahmevorrichtung, wobei das erste Verdeckelement und zweite Verdeckelement mittels der Mitnahmevorrichtung mitnahmesicher verbindbar sind, insbesondere das erste Verdeckelement oder das zweite Verdeckelement nach einer Drehung des zweiten Verdeckelementes bzw. ersten Verdeckelementes, vorzugsweise aus einer gefalteten Position des Verdecks, in der das erste und zweite Verdeckelement zumindest bereichsweise ineinander geschoben sind, um zumindest einen vorbestimmten Winkel drehmitnahmesicher mit dem zweiten bzw. ersten Verdeckelement verbindbar ist, insbesondere das erste Verdeckelement oder das zweite Verdeckelement bei einer weiteren Drehung des zweiten Verdeckelementes bzw. des ersten Verdeckelementes mitdrehbar ist.

Besonders bevorzugt ist, dass das erste Verdeckelement und/oder das zweite Verdeckelement zumindest einen Verdeckbügel umfasst bzw. umfassen, wobei der Verdeckbügel insbesondere über zumindest eine Elementbasis mit der Drehachse des ersten und/oder zweiten Verdeckelementes verbindbar ist, vorzugsweise die Elementbasis und der Verdeckbügel einstückig ausgebildet sind und/oder, insbesondere lösbar, miteinander verbindbar sind.

Auch kann vorgesehen sein, dass an dem Verdeckbügel zumindest ein Abschirmelement, wie zumindest eine Haube, zumindest eine, insbesondere textile, vorzugsweise mehrlagige, Bespannung und/oder Lamelle, anordbar ist, wobei das erste und/oder das zweite Verdeckelement vorzugsweise zumindest zwei Verdeckbügel zur Anordnung des Abschirmelementes, insbesondere der Bespannung umfasst bzw. umfassen.

Weiterhin wird vorgeschlagen, dass die Mitnahmevorrichtung mit zumindest einem Verdeckbügel, zumindest einer Elementbasis und/oder zumindest einem Abschirmelement zumindest indirekt verbindbar ist und/oder die Mitnahmevorrichtung zumindest einen Teil zumindest einer Innenbespannung des Verdecks und/oder zumindest eine Federeinrichtung umfasst.

Bevorzugt ist, dass zumindest ein relativer Winkel zwischen dem ersten Verdeckelement und/oder dem zweiten Verdeckelement kontinuierlich und/oder in diskreten Schritten veränderbar und/oder einstellbar ist, insbesondere das erste Verdeckelement und/oder das zweite Verdeckelement jeweils in zumindest einer Winkelposition um die Drehachse fixierbar ist bzw. sind, wobei vorzugsweise eine Vielzahl von diskreten und/oder kontinuierlichen Winkelpositionen vorgesehen ist.

Mit der Erfindung wird für den Personentransportwagen ferner vorgeschlagen, dass das erste und/oder das zweite Verdeckelement, zumindest eine Elementbasis, zumindest ein Abschirmelement, zumindest ein Verdeckbügel und/oder zumindest eine Mitnahmevorrichtung zumindest bereichsweise zumindest ein Kunststoffmaterial, zumindest ein Verbundmaterial, insbesondere Glasfaserverbundmaterial und/oder zumindest ein Metallmaterial, wie Aluminium, Stahl und/oder zumindest eine Legierung, umfasst bzw. umfassen.

Schließlich schlägt die Erfindung vor, dass der Personentransportwagen ausgebildet ist in Form eines Kinderwagens, vorzugsweise in Form zumindest eines Sportwagens, zumindest eines Buggys, zumindest eines Kinderwagens zum Transport von zumindest zwei Kindern, zumindest eines Rehabuggys und/oder zumindest eines Rehawagens.

Der Erfindung liegt somit die überraschende Erkenntnis zugrunde, dass eine Personenaufnahmevorrichtung für einen Personentransportwagen, insbesondere eine Kinderaufnahmevorrichtung für einen Kinderwagen, so ausgestaltet werden kann, dass sie einerseits zwischen einer Sitzkonfiguration und einer Korb- bzw. Wannenkonfiguration verändert werden kann und andererseits sichergestellt ist, dass die Personenaufnahmevorrichtung an die jeweiligen Gegebenheiten bestmöglich angepasst werden kann, insbesondere die Personenaufnahmevorrichtung in der Sitzkonfiguration so variabel wie möglich einstellbar ist. Dies wird dadurch erreicht, dass die Personenaufnahmevorrichtung im wesentlichen an einer Komponente, die in der Sitzkonfiguration als Rückenlehne dient, an einem Hauptrahmen des Personentransportwagens drehbar befestigbar ist. Dies ermöglicht es, insbesondere in der Sitzkonfiguration, einen beliebigen Neigungswinkel des Sitzes einstellen zu können. Durch die Verbindung einer zweiten Komponente, die in der Sitzkonfiguration als Sitzfläche dient, über eine weitere Drehverbindung lässt sich ein beliebiger Neigungswinkel zwischen der Rücken- und der Sitzfläche einstellen, was bedeutend zu einem größtmöglichen Sitzkomfort beiträgt. Schließlich kann vorgesehen sein, dass eine als Fußstütze dienende dritte Komponente der Personenaufnahmevorrichtung drehbar an der zweiten Komponente befestigt wird. Dies ermöglicht es, insbesondere in der Sitzkonfiguration; die Stellung der Fussstütze an den jeweiligen Neigungswinkel des Sitzes bzw. der Rückenlehne sowie ein relativen Winkel zwischen der Rückenlehne und einer Sitzfläche einzustellen. Ferner sind mit den erfindungsgemäßen Personentransportwagen nur noch zwei Komponenten erforderlich, um einen voll funktionsfähigen Kinderwagen zu erhalten, mit dem sowohl ein Transport im Liegen als auch ein Transport im Sitzen möglich ist, wobei die Aufnahmevorrichtung für das Kind in beiden Fällen der den Wagen schiebenden Person zu- wie auch abgewandt angebracht werden kann. Bei Kinderwagen aus dem Stand der Technik sind regelmäßig mindestens drei Einzelkomponenten erforderlich, um diese Funktionsvielfalt zu erreichen. Dieses ist mit Mehrkosten und einem größeren Platzbedarf verbunden.

Weitere Merkmale und Vorteile der Erfindung ergeben sich aus der nachfolgenden Beschreibung, in der Ausführungsbeispiele der Erfindung anhand schematischer Zeichnungen beispielhaft erläutert sind. Dabei zeigt:
- Figur 1:: einen erfindungsgemäßen Kinderwagen mit einem Hauptkörper und einer erfindungsgemäßen Kinderaufnahmevorrichtung;
- Figur 2:: den Kinderwagen der Figur 1, wobei die Kinderaufnahmevorrichtung mit entsprechenden Stoffelementen bespannt ist sowie ein Verdeck aufweist;
- Figur 3:: eine vergrößerte Detailansicht des Ausschnitts A der Figur 1, in dem eine erfindungsgemäße Verbindungsvorrichtung dargestellt ist;
- Figur 4a:: eine Schnittansicht der Verbindungsvorrichtung der Figur 3 in einer verriegelten Position;
- Figur 4b:: eine Schnittansicht der Verbindungsvorrichtung der Figur 3 in einer entriegelten Position;
- Figur 4c:: eine Schnittansicht der Verbindungsvorrichtung der Figur 3 in einer entriegelten Position;
- Figur 5:: eine perspektivische Ansicht des Kinderwagens der Figur 1 nach einer Lösung der Verbindung zwischen der Kinderaufnahmevorrichtung und dem Hauptkörper;
- Figur 6a:: eine Seitenansicht des Kinderwagens der Figur 1, in der sich die Kinderaufnahmevorrichtung in einen Sitzkonfiguration befindet;
- Figur 6b:: eine Seitenansicht des Kinderwagens der Figur 6a, nachdem die Kinderaufnahmevorrichtung um eine erste Drehachse zur Überführung in einer Korbkonfiguration geschwenkt wird;
- Figur 6c:: eine Seitenansicht des Kinderwagens der Figur 6b, bei dem ein Komponente der Kinderaufnahmevorrichtung zur Überführung derselben in einer Korbkonfiguration um eine zweite Drehachse geschwenkt wird;
- Figur 6d:: eine Seitenansicht des Kinderwagens der Figur 6c, nachdem eine dritte Komponente der Kinderaufnahmevorrichtung zur Überführung derselben in eine Korbkonfiguration um eine dritte Drehachse geschwenkt wurde;
- Figur 7a:: eine Seitenansicht einer Kinderaufnahmevorrichtung in Form einer Wanne umfassend ein Verdeck im gefalteten Zustand;
- Figur 7b:: eine perspektivische Ansicht der Kinderaufnahmevorrichtung der Figur 7a;
- Figur 7c:: eine Seitenansicht der Kinderaufnahmevorrichtung der Figur 7a in einem entfalteten Zustand des Verdecks;
- Figur 7d:: eine perspektivische Ansicht auf die Kinderaufnahmevorrichtung der Figur 7c;
- Figur 8a:: eine perspektivische Ansicht auf einen Kinderwagen umfassend eine weitere Ausführungsform eines Verdecks im entfalteten Zustand;
- Figur 8b:: eine Schnittansicht des Verdecks der Figur 8a;
- Figur 8c:: eine perspektivische Ansicht auf den Kinderwagen der Figur 8a im halb gefalteten Zustand des Verdecks;
- Figur 8d:: eine Schnittansicht des Verdecks der Figur 8c;
- Figur 8e:: eine perspektivische Ansicht auf den Kinderwagen der Figur 8a im zusammen-gefalteten Zustand des Verdecks;
- Figur 8f:: eine Schnittansicht des Verdecks der Figur 8e;
- Figur 9:: eine Seitenansicht eines Kinderwagens umfassend eine Kinderaufnahmevorrichtung gemäß der Figur 8a;
- Figur 10a: einen Kinderwagen umfassend eine Kinderaufnahmevorrichtung gemäß der Figur 6a mit einem Verdeck im entfalteten Zustand;
- Figur 10b:: eine Seitenansicht des Kinderwagens der Figur 10a im gefalteten Zustand des Verdecks;
- Figur 11a:: eine Seitenansicht eines Kinderwagens umfassend eine Kinderaufnahmevorrichtung gemäss Figur 6d in einer Korbkonfiguration mit einem entfalteten Verdeck; und
- Figur 11b:: eine Seitenansicht des Kinderwagens der Figur 11a im gefalteten Zustand des Verdecks.

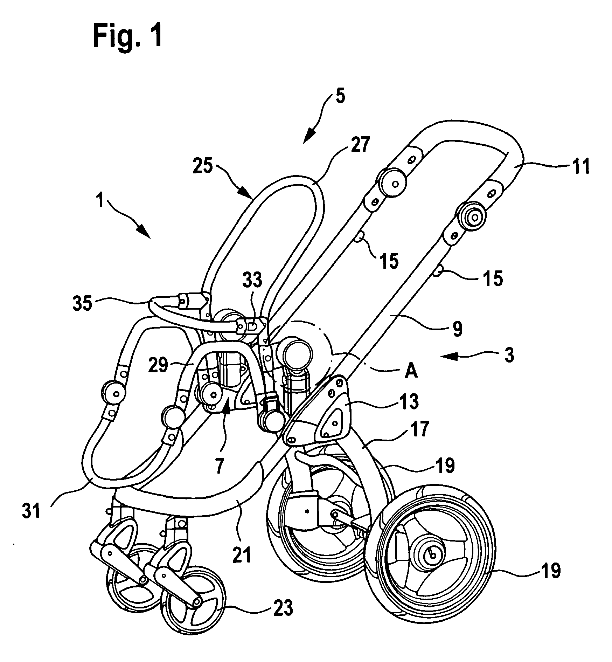

Figur 1 zeigt eine perspektivische Ansicht eines Personentransportwagens in Form eines Kinderwagens 1. Der Kinderwagen 1 umfasst einen Hauptkörper bzw. Rahmen 3 und eine erfindungsgemäße Personenaufnahmevorrichtung in Form einer Kinderaufnahmevorrichtung 5. Hierbei ist zu beachten, dass in Figur 1 lediglich ein Grundkörper der Kinderaufnahmevorrichtung 5 dargestellt ist. Die Kinderaufnahmevorrichtung 5 ist mit dem Rahmen 3 über eine erfindungsgemäße Verbindungsvorrichtung 7 lösbar verbunden. Der Rahmen 3 umfasst unter anderem eine Schubstange 9 mit einem Handgriff 11. Über einen Faltmechanismus 13, der über Auslösehebel 15 entriegelbar ist, ist die Schubstange 9 mit einem Hinterradträger 17, an welchem Hinterräder 19 befestigt sind, und einem Vorderradträger 21, an dem Vorderräder 23 angebracht sind, verbunden. Die Kinderaufnahmevorrichtung 5 umfasst, wie später ausführlicher erläutert wird, einen Rahmen 25, der eine ersten Rahmenkomponente 27, eine zweite Rahmenkomponente 29 sowie eine dritte Rahmenkomponente 31 umfasst. In Figur 1 befindet sich die Kinderaufnahmevorrichtung 5 in einer Sitzkonfiguration, in welcher die erste Rahmenkomponente 27 im wesentlichen eine Rückenlehne eines Sitzes festlegt, die zweite Rahmenkomponente 29 im wesentlichen eine Sitzfläche festlegt bzw. eine Seitenführung bzw. Armlehne für ein in der Kinderaufnahmevorrichtung 5 angeordnetes Kind bereitstellt und die dritten Rahmenkomponente 31 eine Fußauflage festlegt. Wie aus Figur 1 ersichtlich, kann an dem Rahmen 25 über eine Verbindungseinrichtung 33 ein Bügel 35 lösbar angebracht werden. Dieser Bügel 35 verhindert insbesondere in der in Figur 1 dargestellten Sitzkonfiguration der Kinderaufnahmevorrichtung 5 ein Herausfallen des Kindes aus der Kinderaufnahmevorrichtung 5, dient also als Sicherheitsbügel, während der Bügel 35, wie später erläutert werden wird, in einer Korbkonfiguration der Kinderaufnahmevorrichtung 5 als Tragbügel einsetzbar ist.

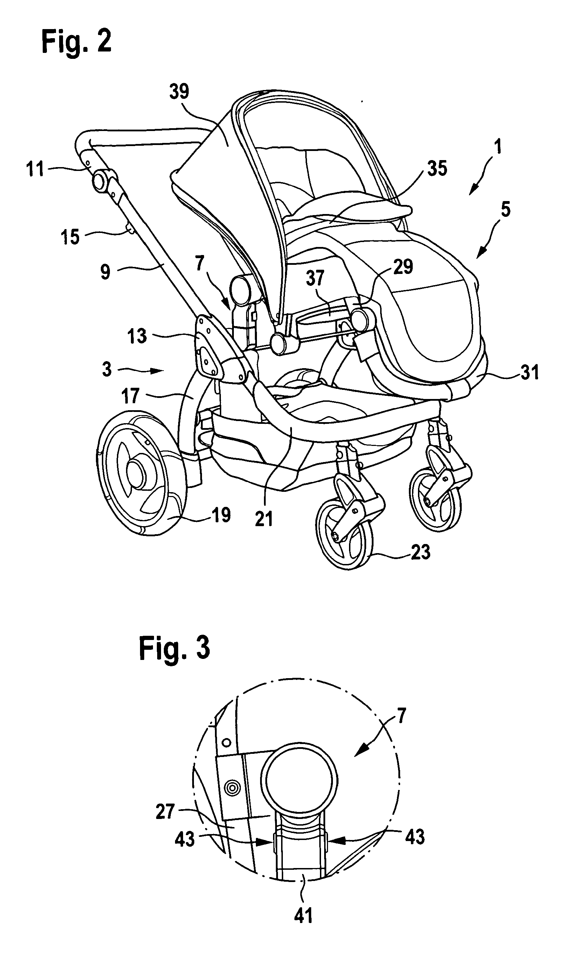

Figur 2 zeigt eine Seitenansicht des Kinderwagens 1 der Figur 1. Im Unterschied zu der Figur 1 ist der Rahmen 25 der Kinderaufnahmevorrichtung 5 mit einem Stoffbezug 37 überzogen, wodurch die entsprechende Sitzfläche und Rücklehne für ein in der Kinderaufnahmevorrichtung 5 aufzunehmendes Kind bereitgestellt wird. Hierbei ist zu beachten, dass zwar in Figur 2 der Rahmen 25 mit einem textilen Stoff überzogen ist, die Erfindung jedoch nicht hierauf beschränkt ist. Insbesondere können an dem Rahmen 25, insbesondere den Rahmenkomponenten 27, 29, 31, auch im wesentlichen feste bzw. unflexible Elemente, wie Hartschalenelemente, zur Bereitstellung einer Rückenlehne, einer Sitzfläche und/oder einer Fußauflage angebracht werden. Ferner ist in Figur 2 an der Kinderaufnahmevorrichtung 5 ein Verdeck 39, welches sich in Figur 2 im gefalteten Zustand befindet, angeordnet.

Im folgenden wird nun der Aufbau und die Funktionsweise der Verbindungsvorrichtung 7 detailliert erläutert. Obwohl in der dargestellten Ausführungsform die Verbindungsvorrichtung 7 zur Verbindung der Kinderaufnahmevorrichtung 5 mit dem Rahmen 3 eingesetzt wird, ist die vorliegende Erfindung nicht auf diese Anwendung beschränkt. So können durch die dargestellte Verbindungsvorrichtung 7 verschiedene Komponenten eines Personentransportwagens, insbesondere des Kinderwagens 1, lösbar miteinander verbunden werden. So könnte beispielsweise die Verbindungseinrichtung 33 die Merkmale der Verbindungsvorrichtung 7 aufweisen, das Verdeck 39 über eine entsprechende Verbindungsvorrichtung mit der Kinderaufnahmevorrichtung 5 verbunden sein, oder weitere Komponenten, wie ein Zusatzsitz oder ein Trittbrett, mit dem Rahmen 3 über eine solche Verbindungsvorrichtung verbunden werden.

Wie Figur 3 zu entnehmen ist, wird die Verbindungsvorrichtung 7 in der dargestellten Ausführungsform eingesetzt, um die Kinderaufnahmevorrichtung 5, insbesondere über die erste Rahmenkomponente 27, mit dem Rahmen 3, insbesondere über ein Anschlusselement 41, lösbar zu verbinden. Um zu verhindern, dass die Kinderaufnahmevorrichtung 5 sich unbeabsichtigt von dem Rahmen 3 löst, umfasst die Verbindungsvorrichtung 7 eine nachfolgend detaillierter beschriebene Verriegelungseinrichtung 45. Die Verriegelungseinrichtung 45 weist Betätigungseinrichtungen in Form von zwei Druckknöpfen 43 auf, wobei eine erste Betätigungseinrichtung in eine Fahrtrichtung des Personentransportwagens angeordnet ist, während die zweite Betätigungseinrichtung entgegen der Fahrtrichtung angeordnet ist. Durch eine Betätigung bzw. ein Niederdrücken von zumindest einem der Druckknöpfe 43 lässt sich die Verriegelungseinrichtung 45 von einer Verriegelungsposition in eine Entriegelungsposition überführen. Befindet sich die Verriegelungseinrichtung 45 in einer Entriegelungsposition, so lässt sich die Kinderaufnahmevorrichtung 5 von dem Rahmen 3 lösen.

Der in der Figur 1 dargestellte Kinderwagen 1 weist zwei Verbindungsvorrichtungen 7, jeweils eine auf jeder Seite der Kinderaufnahmevorrichtung 5, auf. Dabei kann vorgesehen sein, dass sowohl beide Verbindungsvorrichtungen 7 eine entsprechende Verriegelungseinrichtung 45 umfassen. In einer alternativen Ausführungsform kann auch vorgesehen sein, dass lediglich eine der Verbindungsvorrichtungen 7 eine entsprechende Verriegelungseinrichtung 45 aufweist.

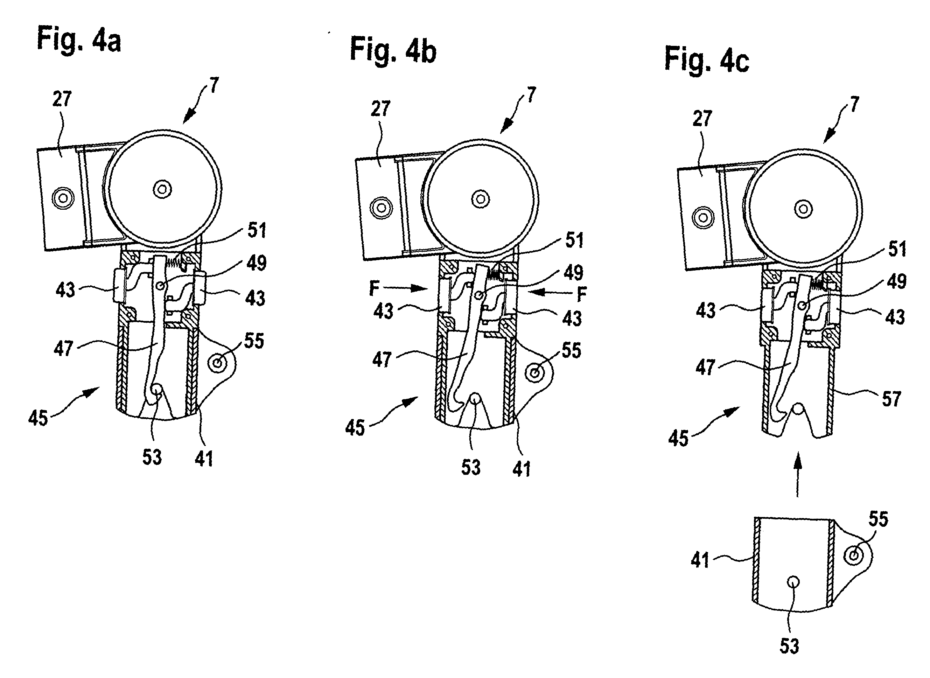

In Figur 4a ist eine Schnittansicht durch die Verbindungsvorrichtung 7 der Figur 3 dargestellt. Die Verbindungsvorrichtung 7 weist eine Verriegelungseinrichtung 45 auf. Die Verriegelungseinrichtung 45 weist ein erstes Verriegelungselement in Form eines Rasthakens 47 auf. Der Rasthaken 47 ist um eine Achse 49 drehbar gelagert. Ferner umfasst die Verriegelungseinrichtung 45 eine Krafterzeugungseinrichtung in Form einer Federeinrichtung 51. Über die Federeinrichtung 51 wird der Rasthaken 47 in die in Figur 4a gezeigte Stellung gezwungen. Die Verriegelungseinrichtung 45 weist ferner ein zweites Verriegelungselement in Form eines Stiftes 53 auf. Der Stift 53 ist insbesondere einstückig mit dem Anschlusselement 41, welches insbesondere über eine Schraubverbindung 55 mit dem Rahmen 3 verbindbar ist, ausgebildet. In der in Figur 4a dargestellten Konstellation befindet sich die Verriegelungseinrichtung 45 in einer Verriegelungsposition. Insbesondere findet der Rasthaken 47 Angriff an dem Stift 53, so dass die Kinderaufnahmevorrichtung 5 nicht von dem Anschlusselement 41 gelöst werden kann.

Um die Kinderaufnahmevorrichtung 5 von dem Rahmen 3 zu entfernen, wird die Verriegelungseinrichtung 45 in eine Entriegelungsposition überführt, wie sie insbesondere in Figur 4b dargestellt ist. Um die Verriegelungseinrichtung 45 in die Entriegelungsposition zu überführen, wird der Rasthaken 47 aus der in Figur 4a dargestellten Verriegelungsposition die in Figur 4b dargestellte Entriegelungsposition, in der er keinen Angriff mehr an dem Stift 53 findet, überführt. Zu diesem Zweck wird einer der Druckknöpfe 43 von einem Benutzer mit einer Kraft F beaufschlagt, wodurch bewirkt wird, dass der Rasthaken 47 sich um die Achse 49 gegen die Kraft der Federeinrichtung 51 dreht. Obwohl, wie in Figur 4b dargestellt ist, gleichzeitig beide Druckknöpfe 43 niedergedrückt werden können, reicht für eine Überführung der Verriegelungseinrichtung 45 aus der Verriegelungs- in die Entriegelungsposition eine Betätigung ausschliesslich eines Druckknopfes 43 aus. So führt eine alleinige Betätigung von einem der Druckknöpfe 43, unabhängig davon, welcher der Druckknöpfe 43 betätigt wird, zu einer identischen bzw. gleichsinnigen Bewegung des Rasthakens 47, d.h. zu einer Drehung des Rasthakens 47 um die Achse 49 in den Figuren 4a und 4b im Uhrzeigersinn.

Die Kinderaufnahmevorrichtung 5 ist derartig ausgestaltet, dass eine Anordnung der Kinderaufnahmevorrichtung 5 in Fahrtrichtung und entgegen der Fahrtrichtung des Kinderwagens 1 möglich ist. Aufgrund der Geometrie des Rahmens 3 sowie verschiedener Aufbauten, die an dem Rahmen 3 und die Kinderaufnahmevorrichtung 5 angebracht werden können, kann es vorkommen, dass eine der Betätigungseinrichtungen bzw. Druckknöpfe 43 von einem Benutzer nicht leicht erreichbar ist, während der andere Druckknopf 43 leicht zugänglich ist. Die Verriegelungseinrichtung 45 führt somit zu dem Vorteil, dass ein unkompliziertes Entriegeln der Verbindungsvorrichtung 7 in jeder Konfiguration des Kinderwagens 1 möglich ist. Dies wird dadurch erreicht, dass die Betätigungseinrichtungen so mit einem der Verriegelungselemente, im vorliegenden Fall dem ersten Verriegelungselement in Form des Rasthakens 47, mechanisch in Wirkverbindung stehen, dass ein Betätigen einer der Betätigungseinrichtungen, unabhängig davon, um welche der Betätigungseinrichtung es sich handelt, eine Bewegung dieses Verriegelungselementes in eine gleichbleibende Richtung bewirkt.

Nach einer Überführung der Verriegelungseinrichtung 45 in eine Entriegelungsposition kann die Kinderaufnahmevorrichtung 5 von dem Rahmen 3 gelöst werden. Wie insbesondere Figur 4c zu entnehmen ist, wird hierzu ein Schaft 57 aus dem Anschlusselement 41 herausgezogen. Insbesondere um zu erreichen, dass sich der Stift 53 in einer festgelegten Position relativ zu dem Rasthaken 47 befindet, wenn die Kinderaufnahmevornchtung 5 an dem Rahmen 3 befestigt wird, weisst der Schaft 57 eine im wesentlichen V-förmige Aussparung 59 auf, in die der Stift 53 gleitet, wenn der Schaft 57 in das Anschlusselement 41 eingeführt wird.

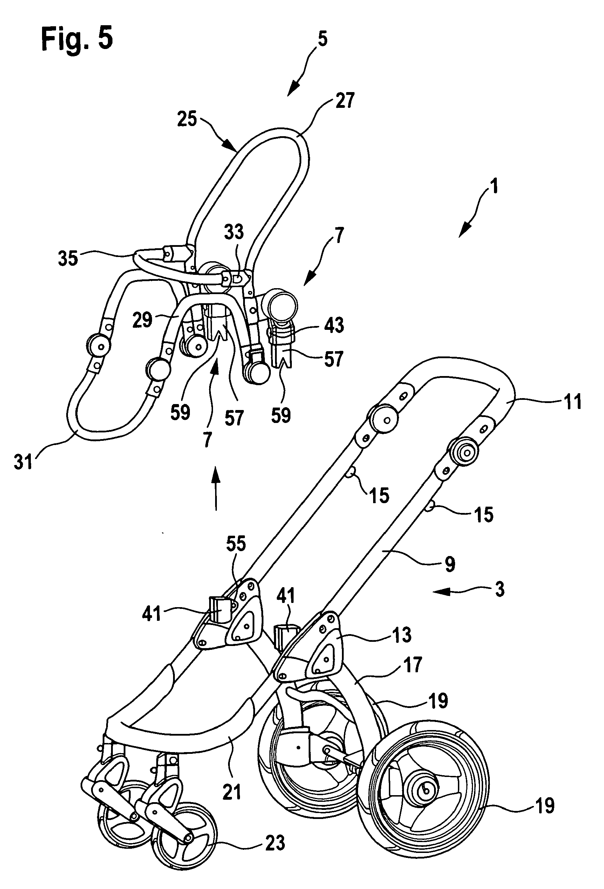

In Figur 5 ist der Kinderwagen 1 der Figur 1 dargestellt, nachdem die Verbindung zwischen der Kinderaufnahmevorrichtung 5 und dem Rahmen 3 durch Betätigung der Verbindungsvorrichtung 7 und durch Anheben der Kinderaufnahmevorrichtung 5 gelöst wurde.

Im folgenden werden nun die Einstellmöglichkeiten der erfindungsgemäßen Kinderaufnahmevorrichtung 5 erläutert, um die Variabilität dieser Kinderaufnahmevorrichtung 5 zu zeigen. Insbesondere wird erläutert, wie die Kinderaufnahmevorrichtung 5 von der in Figur 1 dargestellten Sitzkonfiguration in eine Korb- bzw. Wannenkonfiguration überführt werden kann.

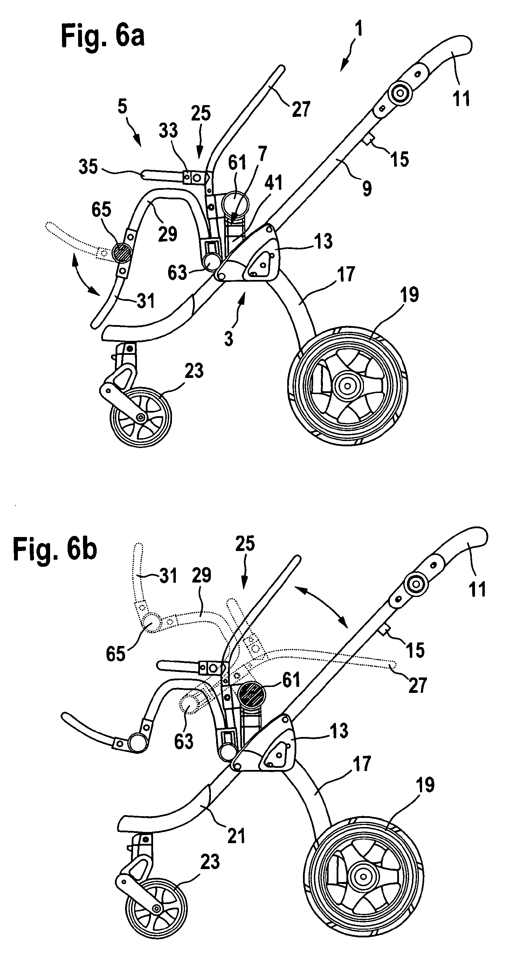

Wie insbesondere Figur 6a zu entnehmen ist, weist die Kinderaufnahmevorrichtung 5 eine erste Drehvorrichtung 61, mittels der die erste Rahmenkomponente 27 schwenkbar mit dem Rahmen 3 über die Verbindungsvorrichtung 7 verbunden ist, auf. Mittels der ersten Drehvorrichtung 61 lässt sich ein Winkel zwischen dem Rahmen 3 und der ersten Rahmenkomponente 27 bzw. der gesamten Kinderaufnahmevorrichtung 5 einstellen. Dabei kann vorgesehen sein, dass die Einstellung stufenlos erfolgen kann oder über die Drehvorrichtung 61 der Winkel in diskreten Schritten verändert werden kann. Insbesondere kann die erste Drehvorrichtung 61 dazu verschiedene Rastpositionen aufweisen in denen die erste Drehvorrichtung 61 vorzugsweise festgestellt werden kann.

Die zweite Rahmenkomponente 29 ist über eine zweite Drehvorrichtung 63 mit der ersten Rahmenkomponente 27 verbunden. Die zweite Drehvorrichtung 63 ermöglicht es, dass ein Winkel zwischen der ersten Rahmenkomponente 27 und der zweiten Rahmenkomponente 29 stufenlos und/oder in diskreten Schritten verändert werden kann. In der in Figur 6a dargestellten Sitzkonfiguration der Kinderaufnahmevorrichtung 5 legt die erste Rahmenkomponente 27 im wesentlichen eine nicht dargestellte Rückenlehne fest, während die zweite Rahmenkomponente eine in Figur 6a nicht dargestellte Sitzfläche festlegt. Die Rückenlehne und Sitzfläche entstehen durch Befestigung eines Stoffüberzuges oder entsprechender Sitzschalenkomponenten an dem Rahmen 25. Somit ermöglicht es die zweite Drehvorrichtung 63, dass in der in Figur 6a dargestellten Sitzkonfiguration ein Winkel zwischen der Rückenlehne und Sitzfläche eingestellt werden kann.

Schliesslich ist die insbesondere als Fußraste dienende dritte Rahmenkomponente 31 über eine dritte Drehvorrichtung 65 mit der zweiten Rahmenkomponente 29 verbunden. In der in Figur 6a dargestellten Sitzkonfiguration ermöglicht die dritte Drehvorrichtung 65 somit eine stufenlose Einstellung und/oder eine Einstellung in diskreten Schritten einer Beinauflage relativ zu der durch die zweite Rahmenkomponente 29 festgelegten Sitzfläche. So können die Beine eines in der Kinderaufnahmevorrichtung 5 sitzenden Kindes wahlweise hochgelegt oder herunterhängen gelassen werden. Bevorzugt weist zumindest eine der Drehvorrichtungen 61, 63, 65 zumindest ein Bedienelement auf, durch welches die entsprechende Drehvorrichtung 61, 63, 65 in einer gewünschten Position verriegelt werden kann bzw. eine entsprechende Verriegelung zur Verstellung der relativen Lagen der Rahmenkomponenten 27, 29, 31 zueinander bzw. des Rahmens 25 zu dem Rahmen 3 des Kinderwagens 1 veränderbar ist.

Im folgenden wird nun erläutert, wie die Kinderaufnahmevorrichtung 5 aus der in Figur 6a dargestellten Sitzkonfiguration in eine Wannen- bzw. Korbkonfiguration überführt werden kann. Gemäß Figur 6b wird dazu zunächst der Rahmen 25 der Kinderaufnahmevorrichtung 5 relativ zu dem Rahmen 3 des Kinderwagens 1 über die erste Drehvorrichtung 61 gekippt. Insbesondere wird eine durch die erste Rahmenkomponente 27 festgelegte Rückenlehne in eine Position, die im wesentlichen parallel zu einer Oberfläche, auf welcher der Kinderwagen 1 angeordnet ist, ausgerichtet ist, gebracht.

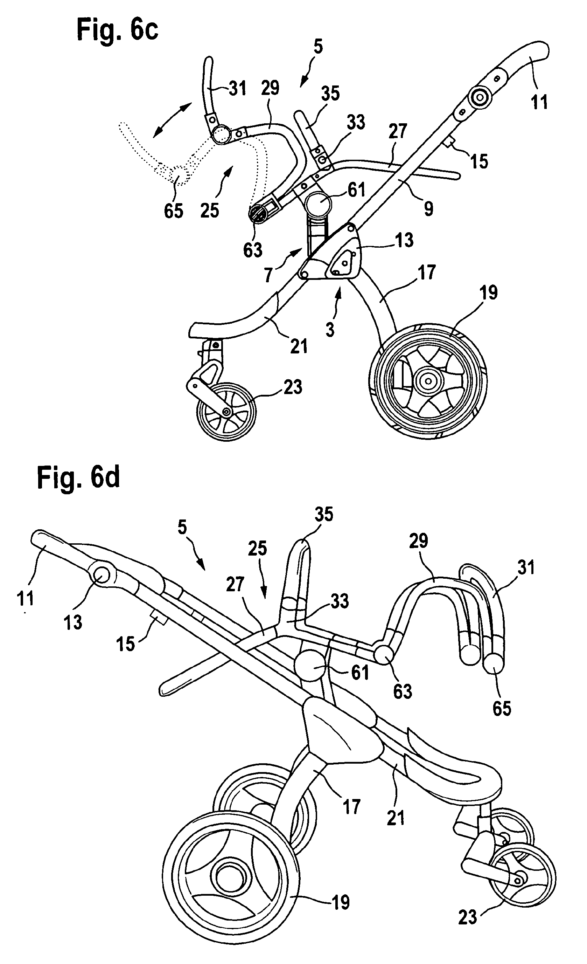

Durch eine anschliessende Betätigung der zweiten Drehvorrichtung 63 kann dann beispielsweise anschliessend die zweite Rahmenkomponente 29 samt der dritten Rahmenkomponente 31 relativ zu der ersten Rahmenkomponente 27 verschwenkt werden, wie in Figur 6c dargestellt. Insbesondere kann der Rahmen 25 auf diese Weise in eine Konfiguration gebracht werden, in welcher sich eine Fläche der durch die ersten Rahmenkomponente 27 festgelegten Rückenlehne in einem Winkel von 180° zu der durch die zweite Rahmenkomponente 29 festgelegten Sitzfläche befindet, so dass eine Liegefläche für ein in der Kinderaufnahmevorrichtung 5 aufgenommenes Kind gebildet wird.

Abschliessend kann dann die dritte Rahmenkomponente über die dritte Drehvorrichtung 65 relativ zu der zweiten Rahmenkomponente 29 verstellt werden, um die Korbkonfiguration, wie sie in Figur 6d dargestellt ist zu komplettieren.

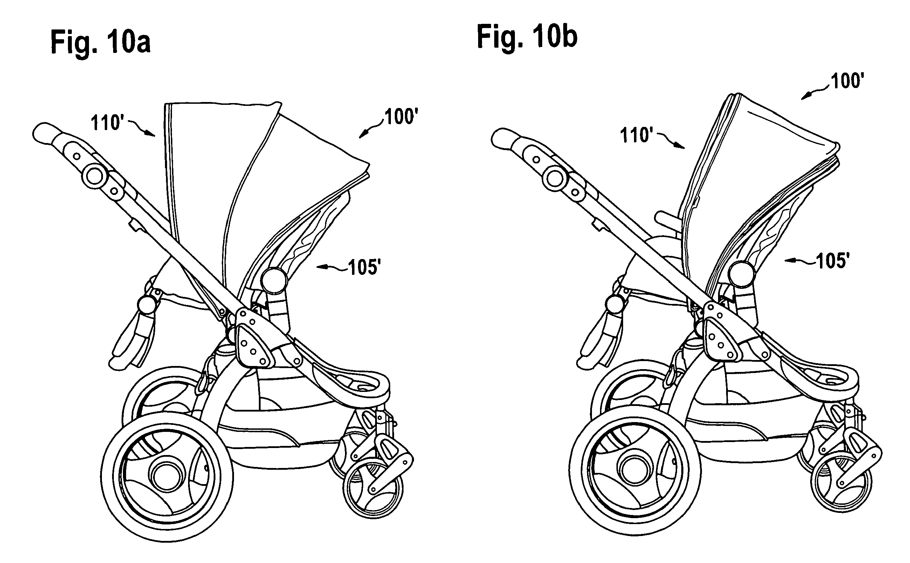

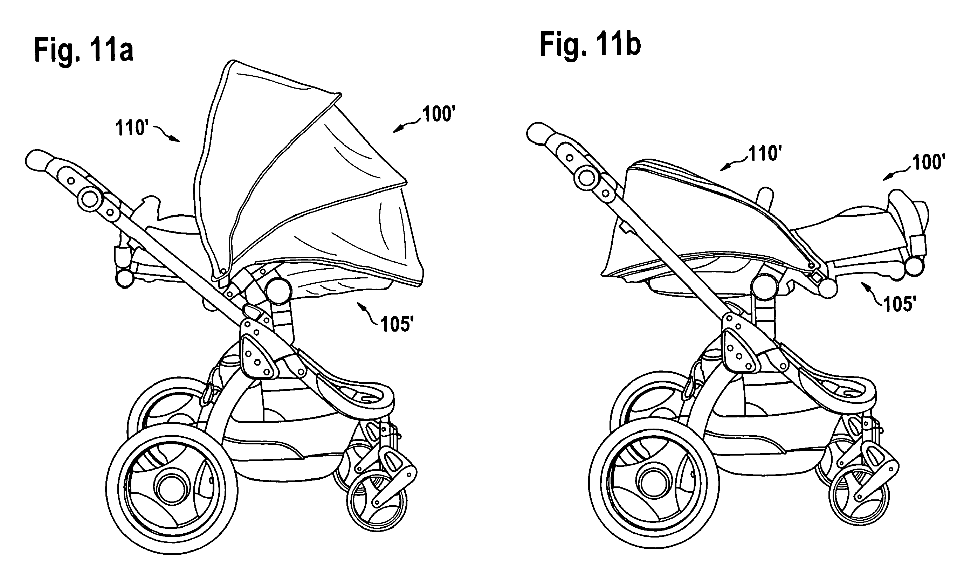

Somit ermöglicht die erfindungsgemäße Kinderaufnahmevorrichtung 5 eine maximale Flexibilität um einen höchstmöglichen Komfort für ein in der Kinderaufnahmevorrichtung aufgenommenes Kind bzw. einen Benutzer bereitzustellen. Die erste Drehvorrichtung 61 ermöglicht eine komplette Verkippung der Kinderaufnahmevorrichtung 5, insbesondere wenn sich diese in einer in den Figuren 6a bzw. 10a und 10b dargestellten Sitzkonfiguration befindet, aber auch wenn sich diese in der in den Figuren 6d bzw. 11a und 11b dargestellten Korb- bzw. Wannenkonfiguration befindet. Des weiteren ermöglicht es die zweite Drehvorrichtung 63, dass, insbesondere wenn sich die Kinderaufnahmevorrichtung 5 in der Sitzkonfiguration befindet, ein Winkel zwischen einer Rückenlehne und einer Sitzfläche der Kinderaufnahmevorrichtung 5 einstellbar ist. Schliesslich ermöglicht es die dritte Drehvorrichtung 65, dass eine Fußstütze in ihrer Position beliebig angepasst werden kann und gleichzeitig als Abschlusswand für die Kinderaufnahmevorrichtung 5 in einer Korbkonfiguration dient. Wie insbesondere den Figuren 6d und 11b zu entnehmen ist, kann der Bügel 35 der Kinderaufnahmevorrichtung 5 in der Korbfiguration derselben als Tragegriff eingesetzt werden, insbesondere um nach einem Entriegeln der Verbindungsvorrichtung 7 die Kinderaufnahmevorrichtung 5 von dem Rahmen 3 abzuheben.

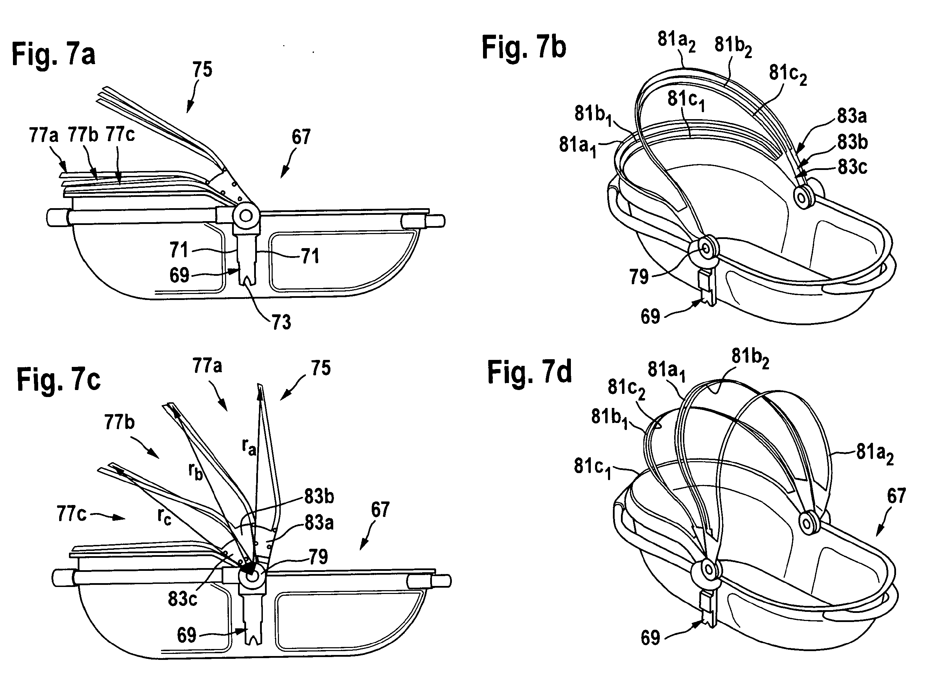

Wie insbesondere der Figur 2 zu entnehmen ist, ist in einer vorteilhaften Ausführungsform des Kindeswagens 1 vorgesehen, dass dieser ein Verdeck 39 aufweist. Im folgenden wird nunmehr detaillierter der Aufbau eines solchen Verdecks anhand der Figuren 7a bis 11b beschrieben. In den Figuren 7a bis 7d ist eine weitere Ausführungsform einer Personenaufnahmevorrichtung in Form einer Kinderaufnahmevorrichtung bzw. Wanne 67 dargestellt. Wie insbesondere Figur 7a zu entnehmen ist, weist die Wanne 67 eine zu der Verbindungsvorrichtung 7 kompatible erfindungsgemäße Verbindungsvorrichtung 69 auf, so dass die Wanne 67 an dem Rahmen 3 des Kinderwagens 1 anstelle der Kinderaufnahmevorrichtung 5 befestigt werden kann. Insbesondere weist die Verbindungsvorrichtung 69 Betätigungseinrichtungen in Form von Druckknöpfen 71, über die ein Rasthaken 73 bewegbar ist, auf.

Wie den Figuren 7a bis 7d zu entnehmen ist, ist an der Wanne 67 ein Verdeck 75 angeordnet, insbesondere lösbar an der Wanne 67 befestigt. Das Verdeck 75 weist, wie insbesondere Figur 7b zu entnehmen ist, Verdeckelemente 77a, 77b, 77c auf. Die Verdeckelemente 77a, 77b, 77c sind um eine gemeinsame Achse 79 drehbar gelagert. Ferner weisen diese, wie den Figuren 7a und 7c zu entnehmen ist, in einer Ebene, die im wesentlichen senkrecht zu der Drehachse verläuft, eine im wesentlichen keilförmige Umfangsform auf. Die Verdeckelemente 77a, 77b, 77c sind hingegen in einer Ebene, die die Drehachse 79 beinhaltet bzw. zu dieser im wesentlichen parallel verläuft, im wesentlichen eine bogenförmige Umfangsform auf, wobei die Radien rₐ, r_{b}, r_{c} der einzelnen Bögen, wie Figur 7c zu entnehmen ist, unterschiedlich groß sind. So weisst das Verdeckelement 77a den grössten Bogenradius rₐ auf, während das Verdeckelement 77b den zweitgrössten Bogenradius r_{b} aufweist und das Verdeckelement 77c den kleinsten Bogenradius r_{c} aufweist. Dies ermöglicht es, dass die Verdeckelemente 77a, 77b, 77c in der in den Figuren 7a und 7b dargestellten, gefalteten Konfiguration des Verdecks 75 teleskopartig bzw. fächerartig ineinander gefahren werden können. Mit anderen Worten überspannen die Verdeckelemente 77a, 77b, 77c in der in Figuren 7a und 7b dargestellten gefalteten Konfiguration des Verdecks 75 im wesentlichen das gleiche Bogensegment um die Drehachse 79, jedoch in unterschiedlichen Abständen zu der Drehachse 79.

Um das Verdeck 75 aus der gefalteten Konfiguration in die in den Figuren 7c und 7d dargestellte entfaltete Position zu überführen, wird das erste Verdeckelement 77a aus der in den Figuren 7a und 7b dargestellten Konfiguration um die Achse 79 gedreht. Wurde das erste Verdeckelement 77a um einen vorbestimmten Winkel gedreht, so gelangt das erste Verdeckelement 77a über eine nicht dargestellte Mitnahmevorrichtung in Verbindung mit dem zweiten Verdeckelement 77b, so dass ein weiteres Drehen des ersten Verdeckelements 77a eine Mitnahme des zweiten Verdeckelements 77b bewirkt. Sind die beiden Verdeckelemente 77a und 77b um einen weiteren vorbestimmten Winkel um die Drehachse 79 gedreht worden, so gelangt das zweite Verdeckelement über eine ebenfalls nicht dargestellte Mitnahmevorrichtung in mechanische Verbindung mit dem dritten Verdeckelement 77c bzw. das erste Verdeckelement 77a über eine nicht dargestellte Mitnahmevorrichtung in mechanischen Kontakt mit dem Verdeckelement 77c. Das Verdeck 75 befindet sich dann insbesondere im entfalteten Zustand, wie es in den Figuren 7c und 7d dargestellt ist. Bei dem in den Figuren 7a bis 7d dargestellten Verdeck ist vorgesehen, dass jedes Verdeckelement 77a, 77b, 77c zwei Verdeckbügel 81a₁, 81a₂ bzw. 81b₁, 81b₂ bzw. 81c₁, 81c2 aufweist. Dabei sind die Verdeckbügel 81a₁, und 81a₂ an einer Elementbasis 83a des Verdeckelements 77a befestigt bzw. einstückig mit dieser ausgebildet. Entsprechend sind die Verdeckbügel 81b₁, 81b₂ bzw. 81c₁, 81c₂ mit Elementbasen 83b bzw. 83c der Verdeckelemente 77b, 77c verbunden bzw. einstückig mit diesen ausgebildet. Insbesondere kann vorgesehen sein, dass die zuvor erwähnten Mitnahmeelemente im Bereich der Elementbasen 83a, 83b, 83c der Verdeckelemente 77a, 77b, 77c angeordnet sind. Die Verdeckelemente 77a, 77b, 77c werden insbesondere mit einem in den Figuren 7a bis 7d nicht dargestellten Verdeckstoff bespannt.

Das Verdeck 75 weist den Vorteil auf, dass die Verdeckelemente auch in dem in den Figuren 7a und 7b dargestellten, gefalteten Zustand des Verdecks 75 voneinander beabstandet sind. Insbesondere wenn das Verdeck beispielsweise in einem feuchten Zustand in die in den Figuren 7a und 7b dargestellte Konfiguration überführt wird, so ist sichergestellt, dass die Oberfläche der einzelnen Verdeckelemente 77a, 77b, 77c, insbesondere der Verdeckstoff, ausreichend belüftet werden kann, insbesondere die Verdeckstoffe der einzelnen Verdeckelemente 77a, 77b, 77c nicht miteinander in Kontakt stehen, so dass eine schnelle Trocknung der Verdeckelemente ermöglicht wird. Darüber hinaus weist das Verdeck 75 auch in der gefalteten Konfiguration eine große Kompaktheit auf.

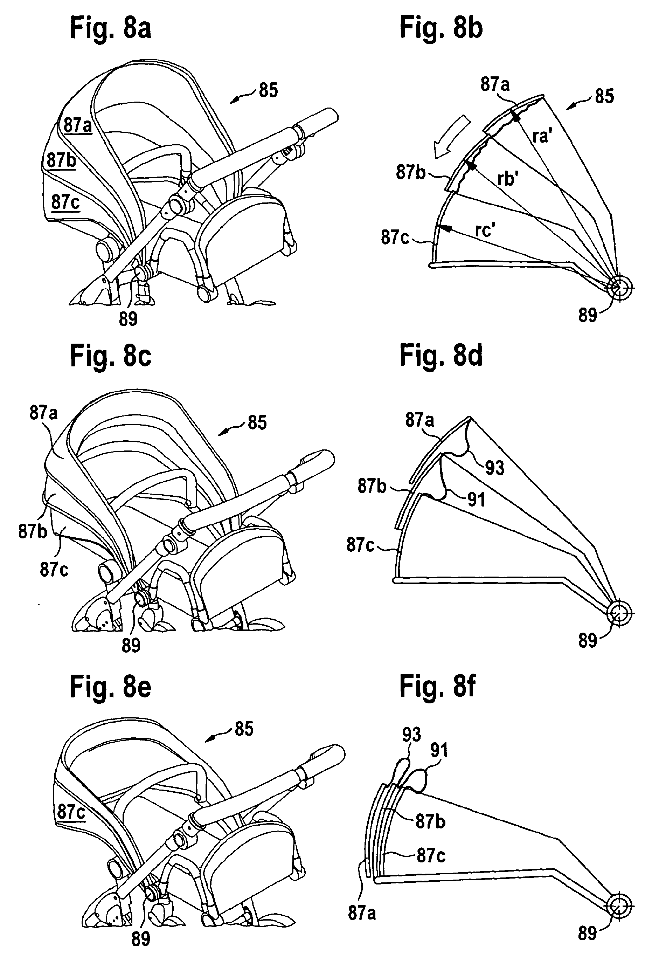

In den Figuren 8a bis 8f ist eine weitere Ausführungsform eines Verdecks 85, welches insbesondere an dem Kinderwagen 1 befestigt werden kann, dargestellt. Das Verdeck 85 weist insbesondere gemäss den Figuren 8a und 8b Verdeckelemente 87a, 87b und 87c auf. Im Gegensatz zu dem Verdeck 75 umfassen die Verdeckelemente 87a, 87b, 87c jedoch keine Verdeckbügel, die mit einem Verdeckstoff bespannt sind, sondern sind im wesentlichen als einstückige Elemente ausgebildet. Ähnlich den Verdeckelementen 77a, 77b, 77c sind die Verdeckelemente 87a, 87b, 87c im wesentlichen bogenförmig zwischen Befestigungspunkten an einer Achse 89, um die die Verdeckelemente 87a, 87b, 87c drehbar sind, angeordnet, wobei die Radien rₐ', r_{b}', r_{c}' unterschiedlich gross sind, insbesondere gilt rₐ' > r_{b}' > r_{c}'. Dadurch wird erreicht, dass die Verdeckelemente 87a, 87b, 87c, wie insbesondere den Figuren 8b, 8d, 8f zu entnehmen ist, teleskopartig bzw. fächerartig ineinander gefahren werden können, wobei, wie insbesondere Figur 8f zu entnehmen ist, im zusammengefalteten Zustand des Verdecks 85, die Verdeckelemente 87a, 87b, 87c voneinander beabstandet bleiben, um insbesondere eine ausreichende Durchlüftung zwischen den Verdeckelementen 87a, 87b, 87c zu ermöglichen. Im Gegensatz zu dem Verdeck 75 sind entsprechende Mitnahmevorrichtungen, durch die die jeweiligen Verdeckelemente bei einem Aufklappen des Verdecks 85 nach einem vorherbestimmten Bewegungsumfang mechanisch miteinander gekoppelt sind, nicht im Bereich der Drehachse 89 sondern von der Drehachse 89 entfernt angeordnet. Bei den Mitnahmevorrichtungen 91, 93 kann es sich insbesondere um ein Innenfutter des Verdecks 85 handeln.

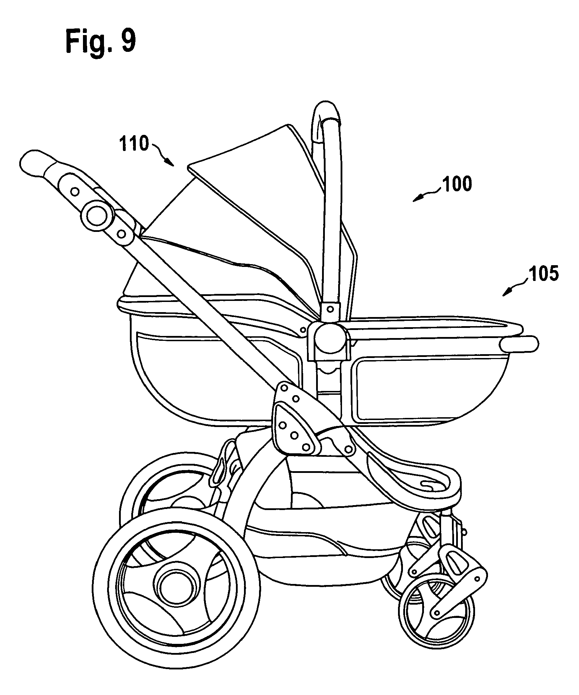

In den Figuren 9 bis 11b sind Kinderwagen 100 und 100' mit jeweiligen Kinderaufnahmevorrichtungen 105, 105' in unterschiedlichen Konfigurationen dargestellt. Figur zeigt einen Kinderwagen 100, welcher eine Kinderaufnahmevorrichtung in Form einer Wanne 105 aufweist, an welcher ein Verdeck 110, welches sich im entfalteten Zustand befindet, angeordnet ist. In den Figuren 10a bis 11b ist ein Kinderwagen 100' dargestellt, welcher eine transformierbare Kinderaufnahmevorrichtung 105', insbesondere ähnlich der Kinderaufnahmevorrichtung 5 aufweist, dargestellt. In den Figuren 10a und 10b befindet sich die Kinderaufnahmevorrichtung 105' in einer Sitzkonfiguration, wobei ein an der Kinderaufnahmevorrichtung 105' angeordnetes Verdeck 110' sich im teilweise entfalteten Zustand befindet, während das Verdeck 110' in Figur 10b zusammengefaltet ist. Im Gegensatz dazu befindet sich die Kinderaufnahmevorrichtung 105' in den Figuren 11a und 11b in einer Wannen- bzw. Korbkonfiguration, wobei in Figur 11a das Verdeck 110' entfaltet ist, während es in Figur 11 b zusammengefaltet ist.

Insbesondere hinsichtlich der Konfiguration eines Verdecks wird darauf hingewiesen, dass die Verdecke gemäss der Erfindung nicht auf einer Konfiguration beschränkt sind bei denen einzelne Verdeckelemente um eine gemeinsame Drehachse schwenkbar gelagert sind. So kann auch vorgesehen sein, dass die Verdeckelemente nicht in Form von Kugel-, Ellipsen-oder Scheibensegmenten ausgebildet sind, sondern die Form von Rohrsegmenten aufweisen können, die entlang einer longitudinalen Achse verschiebbar sind, wobei die Verdecksegmente teleskopartig ineinander schiebbar sind.

Die in der vorgehenden Beschreibung, in den Ansprüchen sowie in den Zeichnungen offenbarten Merkmale der Erfindung können sowohl einzeln als auch in jeder beliebigen Kombination für die Verwirklichung der Erfindung in ihren verschiedenen Ausführungsformen wesentlich sein.

### Bezugszeichen

- 1: Kinderwagen
- 3: Rahmen
- 5: Kinderaufnahmevorrichtung
- 7: Verbindungsvorrichtung
- 9: Schubstange
- 11: Handgriff
- 13: Faltmechanismus
- 15: Auslösehebel
- 17: Hinderradträger
- 19: Hinterrad
- 21: Vorderradträger
- 23: Vorderrad
- 25: Rahmen
- 27: erste Rahmenkomponente
- 29: zweite Rahmenkomponente
- 31: dritte Rahmenkomponente
- 33: Verbindungseinrichtung
- 35: Bügel
- 37: Stoffbezug
- 39: Verdeck
- 41: Anschlusselement
- 43: Druckknopf
- 45: Verriegelungseinrichtung
- 47: Rasthaken
- 49: Achse
- 51: Federeinrichtung
- 53: Stift
- 55: Schraubverbindung
- 57: Schaft
- 59: Aussparung
- 61: erste Drehvorrichtung
- 63: zweite Drehvorrichtung
- 65: dritte Drehvorrichtung
- 67: Wanne
- 69: Verbindungsvorrichtung
- 71: Druckknopf
- 73: Rasthaken
- 75: Verdeck
- 77a, 77b, 77c: Verdeckelement
- 79: Achse
- 81a₁, 81a₂, 81b₁, 81b₂, 81c₁, 81c₂: Verdeckbügel
- 83a, 83b, 83c,: Elementbasis
- 85: Verdeck
- 87a, 87b, 87c: Verdeckelement
- 89: Achse
- 91: Mitnahmevorrichtung
- 93: Mitnahmevorrichtung
- 100, 100': Kinderwagen
- 105, 105': Kinderaufnahmevorrichtung
- 110, 110': Verdeck

- rₐ, r_{b}, r_{c}, rₐ', r_{b}', r_{c}': Radius

- F: Kraft

## Patentansprüche

1. Personenaufnahmevorrichtung (5, 105') für einen Personentransportwagen, wobei die Personenaufnahmevorrichtung (5, 105') zumindest einen Rahmen (25) umfasst und von einer Sitzkonfiguration, in der die Person in einer im wesentlichen sitzenden Position aufnehmbar ist, in eine Korbkonfiguration, in der die Person im wesentliche liegend aufnehmbar ist, und/oder umgekehrt überführbar ist, wobei der Neigungswinkel zumindest einer in der Sitzkonfiguration zumindest eine Rückenlehne festelegenden ersten Rahmenkomponente (27), insbesondere relativ zu zumindest einem Hauptrahmen des Personentransportwagens, über zumindest eine erste Drehvorrichtung (61) einstellbar ist und der Rahmen (25) zumindest eine in der Sitzkonfiguration zumindest eine Sitzfläche festlegende zweite Rahmenkomponente (29) umfasst, **dadurch gekennzeichnet, dass**
zumindest ein Winkel zwischen der ersten (27) und der zweiten Rahmenkomponente (29) unabhängig von der ersten Drehvorrichtung (61) über eine die erste (27) und die zweite Rahmenkomponente (29) verbindende zweite Drehvorrichtung (63) einstellbar ist.

2. Personenaufnahmevorrichtung nach Anspruch 1, **dadurch gekennzeichnet, dass**
der Rahmen (25) zumindest eine, vorzugsweise in der Sitzkonfiguration eine Fußstütze festlegende, dritte Rahmenkomponente (31) aufweist, wobei die zweite (29) und dritte Rahmenkomponente (31) über zumindest eine dritte Drehvorrichtung (65) miteinander verbunden sind, insbesondere zumindest ein Winkel zwischen der zweiten (29) und dritten Rahmenkomponente (31) einstellbar ist.

3. Personenaufnahmevorrichtung nach Anspruch 1 oder 2, **dadurch gekennzeichnet, dass**
die Personenaufnahmevornchtung (5, 105'), zumindest in der Korbkonfiguration, eine im wesentlichen ebene Liegefläche, insbesondere gebildet durch zumindest einen Teil der Rückenlehne und/oder zumindest einen Teil der Sitzfläche, umfasst.

4. Personenaufnahmevorrichtung nach einem der vorangehenden Ansprüche, **gekennzeichnet durch**
zumindest einen mit der ersten (27) und/oder der zweiten Rahmenkomponente (29), insbesondere lösbar, verbindbare und/oder mit der ersten (27) und/oder der zweite Rahmenkomponente (29) zumindest bereichsweise einstückig ausgebildeten Bügel (35), wobei der Bügel (35) vorzugsweise in der Sitzkonfiguration als Sicherheitsbügel verwendbar ist und /oder in der Korbkonfiguration als Tragegriff verwendbar ist.

5. Personenaufnahmevorrichtung nach einem der vorangehenden Ansprüche, **dadurch gekennzeichnet, dass**
mittels der ersten Drehvorrichtung (61) der Winkel zwischen der ersten Rahmenkomponente (27) und einem Hauptrahmen eines Personentransportwagens, mittels der zweiten Drehvorrichtung (63) der Winkel zwischen der ersten (27) und der zweiten Rahmenkomponente (29) und/oder mittels der dritten Drehvorrichtung (65) der Winkel zwischen der zweiten (29) und dritten Rahmenkomponente (31) kontinuierlich und/oder in diskreten Schritten einstellbar ist bzw. sind und/oder mittels der ersten Drehvorrichtung (61) die erste Rahmenkomponente (27) relativ zu einem Hauptrahmen eines Personentransportwagens, mittels der zweiten Drehvorrichtung (63) die zweite Rahmenkomponente (29) relativ zu der ersten Rahmenkomponente (27) und/oder mittels der dritten Drehvorrichtung (65) die dritte Rahmenkomponente (31) relativ zu der zweiten Rahmenkomponenten (29) klapp- bzw. drehbar und gegebenenfalls fixierbar ist bzw. sind.

6. Personenaufnahmevorrichtung nach einem der vorangehenden Ansprüche, **dadurch gekennzeichnet, dass**
der Rahmen (25), insbesondere die erste (27), zweite (29) oder dritte Rahmenkomponente (31), mittels zumindest einer Verbindungsvorrichtung (7) an einem Hauptrahmen eines Personentransportwagens, insbesondere reversibel lösbar, befestigbar ist.

7. Personenaufnahmevorrichtung nach einem der vorangehenden Ansprüche, **gekennzeichnet durch**
zumindest ein, insbesondere mit der ersten (27), der zweiten (29) und/oder der dritten Rahmenkomponente (31) und/oder der ersten (61), zweiten (63) und/oder dritten Drehvorrichtung (65) verbindbares oder verbundenes, vorzugsweise faltbares und/oder, insbesondere teleskopartig ineinander schiebbares Verdeck (75, 85, 105').

8. Personenaufnahmevorrichtung nach einem der vorangehenden Ansprüche, **gekennzeichnet durch**
zumindest eine an zumindest einer ersten, zweiten und/oder dritten Rahmenkomponente (27, 29, 31), insbesondere lösbar, befestigbare oder befestigte und/oder mit zumindest einer ersten, zweiten und/oder dritten Rahmenkomponente (27, 29, 31) einstückig ausgebildete, vorzugsweise die Sitzfläche und/oder die Rückenlehne bildende, Sitzkomponente, insbesondere umfassend zumindest eine, vorzugsweise textile, Bespannung (37) und/oder zumindest eine im wesentlichen feste Auflage, wie zumindest eine Schalenkomponente.

9. Personenaufnahmevorrichtung nach einem der vorangehenden Ansprüche, **dadurch gekennzeichnet, dass**
die zweite Rahmenkomponente (29) derartig aufgeformt ist, dass sie zumindest in der Sitzkonfiguration zwei seitliche Armstützen bereitstellt.

10. Personenaufnahmevorrichtung (5, 105') nach einem der Ansprüche 1 bis 9, **gekennzeichnet durch** eine kombinierte, insbesondere einheitliche, Drehvorrichtung, umfassend die erste (61) und die zweite Drehvorrichtung (63).

11. Personentransportvorrichtung (5, 105') nach einem der Ansprüche 1 bis 10, **dadurch gekennzeichnet, dass**
die Verbindungsvorrichtung (7) die erste (61) und die zweite Drehvorrichtung (63) oder die kombinierte Drehvorrichtung umfasst.

12. Personentransportwagen (1, 100'), umfassend eine erste Komponente, insbesondere in Form oder als Teil eines Hauptrahmens (3), und zumindest eine Personenaufnahmevorrichtung (5, 105') nach einem der Ansprüche 1 bis 11 als zweite Komponente.

13. Personentransportwagen nach Anspruch 12, **gekennzeichnet durch**
zumindest eine Verbindungsvorrichtung (7) zur reversibel lösbaren Verbindung zumindest einer ersten Komponente (3), insbesondere des Hauptrahmens, und zumindest der Personenaufnahmevorrichtung (5, 105') als zweiter Komponente des Personentransportwagens (1), wobei die Verbindungsvorrichtung (7) zumindest eine Verriegelungseinrichtung (45) mit zumindest einem mit der ersten Komponente (3) in Wirkverbindung stehenden ersten Verriegelungselement (53), zumindest einem mit der zweiten Komponente (5) in Wirkverbindung stehenden zweiten Verriegelungselement (47) und zumindest einer Betätigungsvorrichtung (43) umfasst, wobei die Verriegelungseinrichtung (45) zumindest eine Verriegelungsposition, in der das erste Verriegelungselement (53) und das zweite Verriegelungselement (47) in mechanischem Eingriff miteinander stehen, und zumindest eine Entriegelungsposition, in der der mechanische Eingriff gelöst ist, aufweist, wobei das erste (53) und/oder das zweite Verriegelungselement (47) mittels der Betätigungsvorrichtung (43) zur Überführung der Verriegelungseinrichtung (45) in die Verriegelungsposition und/oder Entriegelungsposition bewegbar ist bzw. sind, wobei die Betätigungsvorrichtung zumindest eine erste Betätigungseinrichtung (43) und zumindest eine zweite Betätigungseinrichtung (43) umfasst und **durch** eine Betätigung der ersten Betätigungseinrichtung und/oder **durch** eine Betätigung der zweiten Betätigungseinrichtung das erste Verriegelungselement von einer Verriegelungs- in eine Entriegelungsstellung, oder umgekehrt, gleichsinnig bewegbar ist und/oder **durch** eine Betätigung der ersten Betätigungseinrichtung (43) und/oder **durch** eine Betätigung der zweiten Betätigungseinrichtung (43) das zweite Verriegelungselement (47) von einer Verriegelungs- in eine Entriegelungsstellung, oder umgekehrt, gleichsinnig bewegbar ist und wobei vorzugsweise die erste und die zweite Betätigungseinrichtung (43) von verschiedenen, insbesondere gegenüberliegenden, Seiten der Verbindungsvorrichtung (7) aus betätigbar sind.

14. Personentransportwagen nach Anspruch 12 oder 13, ferner umfassend zumindest ein Rad (19, 23), zumindest einen Radträger (17, 21), zumindest einen Griff (11), zumindest eine Schubstange (9), zumindest einen Hilfssitz, zumindest ein Trittbrett und/oder zumindest ein, vorzugsweise faltbares, Verdeck (75, 85, 110, 110'), insbesondere in Form einer Abdeckhaube, eines Baldachins, einer Überdachung, eines Vordachs, eines Schirms und/oder einer Haube.

15. Personentransportwagen nach einem der Ansprüche 12 oder 14, **dadurch gekennzeichnet, dass**
die Verbindungseinrichtung (7) zumindest eine erste Kraftaufbaueinrichtung, insbesondere umfassend zumindest eine Federeinrichtung, mittels der das erste Verrieglungselement in zumindest eine Verrieglungsposition oder zumindest eine Entriegelungsposition zwingbar ist und/oder zumindest eine zweite Kraftaufbaueinrichtung, insbesondere umfassend zumindest eine Federeinrichtung (51), mittels der das zweite Verrieglungselement (47) in zumindest eine Verrieglungsposition oder zumindest eine Entriegelungsposition zwingbar ist, umfasst.

16. Personentransportwagen nach einem der Ansprüche 12 bis 15 in Form eines Kinderwagens (1, 100, 100'), vorzugsweise in Form zumindest eines Sportwagens, zumindest eines Buggys, zumindest eines Kinderwagens zum Transport von zumindest zwei Kindern, zumindest eines Rehabuggys und/oder zumindest eines Rehawagens.
